# EUROPEAN PATENT APPLICATION

(11) **EP 4 332 854 A1**
(43) Date of publication of application: **06.03.2024**
(21) Application number: 22193471.4
(22) Date of filing: 01.09.2022
(51) Int. Cl.: G06Q 10/06

(54) **FUNCTIONAL FACILITY AND METHOD FOR MONITORING AND CONTROLLING A FUNCTIONAL FACILITY**

(71) Applicant: Jung, Egon, 93051 Regensburg (DE)
(72) Inventor: Jung, Egon, 93051 Regensburg (DE)
(74) Representative: Valvoda, Jakob

(57) **Abstract**

In one embodiment, a functional facility comprises at least one functional device, each functional device maintaining first information, the first information including at least one operational state and one or more consumption values representing operation of the functional device, one or more sensor devices configured to monitor the functional facility and the at least one functional device and to generate second information related to the functional facility, and a controller configured to transmit the first information maintained by the at least one functional device and the second information from the one or more sensor devices to a server, wherein the server is configured to process the first information maintained by the at least one functional device and the second information from the one or more sensor devices, to generate one or more operational tasks related to the functional facility, and wherein the controller is further configured to receive at least one command from the server, the at least one command corresponding to at least one of the one or more operational tasks, and to configure operation of the functional facility according to the at least one command. Moreover, embodiments referring to a server for monitoring and controlling a functional facility, a system, and a method for monitoring and controlling a functional facility are disclosed.

## Description

### TECHNICAL FIELD

The present invention relates to a functional facility and a server for monitoring and controlling a functional facility. In particular, embodiments of the present invention may relate to facilities that provide a function for one or more users.

### BACKGROUND

Functional facilities represent rooms or other environments that are operated by users in order to enable a functionality provided by the functional facility. Functional facilities may include sanitary facilities, or changing rooms, to name a few. For example, the functional facility may provide a sanitary function, such as in a sanitary facility, or maintain privacy, such as by provided lockable environments in a changing room. To be able to provide the desired functionality, the functional facility may be equipped with hardware that is operated by the users and/or defined third parties. For example, the hardware may provide consumable products, such as soap, water, or toilet paper that may require a refill.

To maintain functionality and operability, service personnel must inspect the functional facilities on a regular basis. This may include an inspection of the spatial environment, maintenance of the hardware, and potentially refill of consumables. Service personnel must be scheduled and maintenance is typically performed based on an estimated number of users in recurring intervals.

However, it may be difficult to monitor if the hardware of the functionality facility does not work properly or if consumables have been used up and require a refill. In particular, it is difficult to establish whether the functional facility can still provide the intended functionality as a whole.

In view of the above, one object is to improve the maintenance of functional facilities. In particular, one object is to provide an approach for automated monitoring and control of functional facilities and the usability of them, which increases the availability of functional facilities and reduces functional failures, as well as maintenance efforts. Moreover, it would be desirable if the maintenance could be adapted to the actual use of the functional facilities.

### SUMMARY

The problem is solved by a functional facility, a server for monitoring and controlling a functional facility, a system, and a method for monitoring and controlling a functional facility as defined in the independent claims. Preferred embodiments are defined in the corresponding dependent claims.

A first aspect of the present disclosure provides a functional facility, comprising at least one functional device, each functional device maintaining first information, the first information including at least one operational state and one or more consumption values representing operation of the functional device, one or more sensor devices configured to monitor the functional facility and the at least one functional device and to generate second information related to the functional facility, and a controller configured to transmit the first information maintained by the at least one functional device and the second information from the one or more sensor devices to a server, wherein the server is configured to process the first information maintained by the at least one functional device and the second information from the one or more sensor devices, to generate one or more operational tasks related to the functional facility, and wherein the controller is further configured to receive at least one command from the server, the at least one command corresponding to at least one of the one or more operational tasks, and to configure operation of the functional facility according to the at least one command.

Functional facilities, as used throughout this disclosure, denote areas, spaces, buildings, rooms, cabins, or any other kind of spatial environment that is operated by one or more users or groups of users within or at the spatial environment in order to apply, use, or consume at least one functionality provided by the functional facility. Functional facilities may include sanitary facilities, changing or dressing rooms, operating rooms or preparation areas, to name a few. A functional facility may also combine the functionality of one or more of these functional facilities, including a sanitary facility, changing or dressing room, operating room or preparation area, and the like. For example, a functional facility may provide a sanitary function of a sanitary facility with a privacy function of a changing or dressing room.

To be able to provide the at least one functionality, the functional facility includes the functional device or a plurality of functional devices. Each functional device may be any kind of hardware, such as a dispenser, a sink, a light, a lock, and the like, that can be operated by users in order to provide the desired functionality of the functional facility. Each functional device maintains first information, preferably in an electronic form in a memory or buffer. The first information includes at least one operational state and one or more consumption values representing operation of the functional device. The at least one operational state may represent a current state of the respective functional device, such as "operational", "locked", "used", "out of order", and the like. The consumption values may relate to a value that may indicate a number of uses of the functional device or that may monitor the amount of used consumable products. For example, the consumption values may count a number of uses of a lock, or switching cycles of a light, or the amount of soap, disinfectant or toilet paper that has been used. Accordingly, the first information may reflect a current status of each individual functional device of the functional facility.

The functional facility further includes one or more sensor devices. The sensor devices may serve the purpose of providing global information of the functional facility rather than information related to individual functional devices. The one or more sensor devices may be distributed across the functional facility and are configured to monitor the functional facility. This may include monitoring of at least some of the functional devices. The sensor devices generate second information related to the functional facility. For example, the second information may reflect a general state of the functional facility, a number of users, or general states that may reflect maintenance cycles, changes in operational state of the functional facility, or a number and frequency of users. The second information may further include an identification, which may enable an identification of the respective sensor device and/or the functional facility and/or monitored functional devices, in any combination.

The functional facility further comprises a controller. The controller may be embodied as hardware, software, or a combination thereof. The controller may be implemented as a general computing device or as dedicated hardware, which may be a system on a chip or other hardware circuits configured to perform the required functionality. The controller may be configured to retrieve and process the first and second information. The controller is further configured to transmit the first information maintained by the at least one functional device and the second information from the one or more sensor devices to the server and to receive commands from the server and configure operation of the functional facility according to the commands. Accordingly, the controller represents a communication and/or processing hub that may be connected to the functional devices, and the sensors of the functional environment to retrieve the required information, and to configure the functional devices and/or the sensors such that the functional facility provides the intended functionality. Since functional facilities are often publicly accessible, it is desirable to keep the configuration of the local equipment simple and robust. Thus, control of the functional facility may be relocated to the server, which may enable the hardware of the controller to be reduced to a minimum. This may reduce maintenance costs on site while preserving full maintenance and operational control over the functional environment.

The server may be kept locally or in a remote location. For example, the server may be kept in a secured room at the site of the functional facility, or the local environment of the functional facility may be connected via a network to the server. It is to be understood that the server may be part of a server farm or a cloud environment, including a plurality of servers and respective server hardware. Yet, the server is to be understood as a part of the functional facility or of a system, including the functional facility and the (at least one) server. The server may retrieve the first and second information from the controller. For example, the controller may push any update of the first and second information to the server. As an alternative, the controller may provide the first and second information on a regular basis and at regular intervals. The controller may also provide the first and second information based on availability of a (network) connection to the server. This may be the case when the functional facility is not provided on a specific location or may be re-located, such as in mobile toilets or other mobile functional facilities. As an alternative, the server may be configured to request or pull the first and second information from the controller.

The server is configured to process the first information maintained by the at least one functional device and/or the second information from the one or more sensor devices. The processed information may be used to generate one or more operational tasks for the functional facility. This may include, as an example only, changing a set-up of the functional devices, recalibrating the sensor devices, or requesting maintenance of the functional facility. For example, the server may generate an operational task to lock a door of a toilet cabin that may require maintenance, to (re-)calibrate a sensor device in the functional facility to retrieve specific information, or to change light conditions in a room or environment of the functional facility. The operational task may also trigger maintenance of the functional facility, of at least one of the functional devices, and/or at least one of the sensor devices, in any combination.

The server may transmit the operational task for the functional facility to the controller of the functional facility, wherein the controller may issue or trigger one or more commands for the affected functional device and/or sensor device in order to achieve the intended operational task.

The functional facility maintains comprehensive information, both individual for the hardware of the functional devices and global with respect to the entire functional facility, and shares this information with at least one server that processes the information to maintain functionality and operability of the functional facility. The server generates respective operational tasks that are translated by the local controller into commands that control the individual functional devices and/or sensor device to ensure that the functional facility provides the intended function with a high service level. Moreover, service personnel may be scheduled and inspections may be triggered when needed rather than relying on regular maintenance intervals that may not fully reflect unexpected deviating frequencies of use, current states, and consumption values of the functional facilities. Accordingly, service personnel may be scheduled in a precise and automated manner based on actual use and numbers of users to save valuable resources. This improves maintenance of functional facilities, enables automated monitoring and control of the functional facilities, and increases their availability while reducing functional failures, as well as maintenance efforts.

In a preferred embodiment, the one or more sensors include a sensor for detecting users of the facility. The second information may include information on the number of users using the at least one functional device. As an alternative, the second information associated with the sensor for detecting users of the facility may include a count of users, a frequency of use, time of use, or a respective series of time values of a user entering and/or leaving the area covered by the sensor. The second information may further include values indicating how long a user has remained in the area covered by the sensor or whether there are users in the functional environment. The second information may be further linked to one or more consumption values in the first information of a functional device. This may be used to determine a behavior of the users. For example, the second information may include values that may indicate that a user is still present in an area of the functional facility for a duration of time. The first information may further indicate that a related functional device has not been used. If the duration of time exceeds a threshold, this may lead to a conclusion that the user is unconscious or otherwise in need of assistance. Accordingly, an operational task may be an emergency instruction to service personnel to check the functional facility, and another operational task may control light conditions in the functional facility or may activate further sensors to validate the first and second information. Preferably, the sensor may be a lidar sensor and/or a motion detector and/or an infrared detector. It is to be understood that the functional facility may include a plurality of sensors of the same type or of different types, in any combination.

According to a particularly preferred embodiment, the at least one functional device (or the functional facility) includes a room or a cabin. Preferably, the at least one command is to operate an entrance of the room or cabin. For example, a command may open or lock a door of the room or cabin.

In yet another embodiment, the entrance is locked responsive to the at least one command if at least one of the one or more consumption values falls below or exceeds a threshold value. Additionally or as an alternative, the entrance is locked responsive to the at least one command if the at least one operational state indicates that the room or cabin has not been used. The consumption value falling below or exceeding the threshold value may indicate that consumables may have been used up so that operation of the functional device (or the functional facility) may no longer be possible. Thus, locking the entrance may ensure that a service level is maintained. In parallel, the server may generate a service task as an operational task that may trigger service personnel. Similarly, if the functional device has not been used, for example, for a duration of time exceeding a further threshold value, this may indicate that the capacity of the functional facility can be adjusted to actual needs, and unused functional devices may be automatically locked. This saves resources required to keep a functional device in operation mode.

According to a particularly preferred embodiment, if the room or cabin has been used for a time duration that exceeds a threshold, the controller is further configured to verify whether the operational state of the room or cabin has changed. This may include that an indication is sent to a device. The device may be a fixed device, a mobile device, and/or a networked device. The device may be operated by service personnel. Thus, further or as an alternative to generating operational tasks at the server, the controller (or the server) may directly send the indication to the device to trigger a maintenance or emergency task. The controller may activate further sensors to verify the operational state of the room or cabin or may retrieve current operational state data from the first information of the room or cabin. Similar to other embodiments, this may lead to the conclusion that the user is unconscious or otherwise in need of assistance. In particular, if the controller confirms that the operational state of the room or cabin has not changed, the controller may communicate respective information to the server, and the server may generate an operational task, which may be an emergency instruction to service personnel to check the functional facility.

In yet another preferred embodiment, the one or more sensors include a camera or a LIDAR, and the second information includes one or more images of the at least one functional device. Preferably, after operation of the at least one functional device, the one or more images are compared with a reference image of the at least one functional device. The comparison may serve the purpose to determine if cleaning of the functional device is required. To ensure privacy, the controller may configure the camera to generate images of the functional device without the user. Same configuration may be applied to the LIDAR. The controller may determine, using one or more of the sensors or the camera or the LIDAR, whether a user is present or not, and active or deactivate the camera or the LIDAR to generate the one or more images. The reference image may reflect a clean state of the functional device. For example, after cleaning of the functional device, service personnel may interact with the controller to acquire the reference image or a new reference image of the functional device. The obtained reference image may be transmitted to the server or maintained locally, such that the controller may perform the comparison on site.

In a further embodiment, the controller is further configured to receive a query for information related to the at least one functional device, and, responsive to the query, send the first and second information to a device. The device may be a fixed device, such as an on-site terminal, and/or a mobile device. For example, the device may be operated by service personnel. The device may display the first and second information or may process the received first and second information to derive values indicating an operational state of the functional device(s). This may provide a fast overview of the operational states and indicate (on-site) which functional devices (and where) need service. The mobile device may be (or may be connected to) an augmented reality device, which may guide the service personnel during service tasks, such as by displaying the operational state and/or related service instructions for a functional device as an overview when the service personnel is looking in direction of the functional device.

According to a preferred embodiment, the first and/or second information are submitted to the device responsive to the device initiating communication with the functional facility using a local terminal. For example, a service employee may use the device, such as a mobile, networked or portable device, when entering the functional facility to initiate communication with (the controller) of the functional facility to retrieve the data related to the functional devices and/or to operational tasks. Thus, by entering the functional facility, the service employee may receive all data in an automated manner without any further interaction. This may ensure a fluent service process by requiring less interaction.

In a preferred embodiment, the one or more operational tasks include one or more of a cleaning task, a refill task, and/or a repair task. The service personnel may include specialized workers, such as cleaning operatives, maintenance workers, and/or craftsmen. The service personnel may be equipped with terminal devices, such as tablets or smartphones, or any other mobile, portable or networked devices that may be used to receive information related to the operational task, such as an identification of the functional facility, an identification of one or more of the functional devices and/or sensors of the functional facility that may require maintenance, and/or an indication of consumables that have to be verified, adjusted or re-filled. The cleaning task may be distributed to one or more cleaning operatives, the refill task may be distributed to cleaning operatives or maintenance workers, and the repair task may be distributed to respective craftsmen. However, it is to be understood that these are examples of service personnel and respective tasks and that other or similar tasks may be assigned to other or similar groups of service personnel.

According to a particularly preferred embodiment, responsive to the consumption values exceeding a threshold, the server is configured to generate a refill task. Additionally, or as an alternative, the server may be further configured to issue a command to restrict access to the at least one functional device. The command may be transmitted to the controller, which may operate an entry, door, or other access mechanisms of the at least one functional device, in order to restrict the access.

According to another embodiment, the server is configured to compare the consumption values with a frequency of use of the at least one functional device to determine an expected time for the refill task and to delay the generation of the refill task by the expected time. The server may track the frequency of use for individual functional devices and may define respective time-dependent values for individual days and/or times of the day. These values may be continuously updated by the server according to current usage values as defined by the second information. Based on current consumption values, the server may determine a current fill level of a consumable and estimate the time until the consumable is used up. Accordingly, the refill task may be scheduled at a fill level of 40%, 30%, 15%, or 5%. This may depend on fluctuations in the frequency of use, such as a variance, distribution or spread, or any other statistical value suitable for identifying uncertainties in the frequency of use.

In yet another embodiment, the one or more operational tasks each include a priority and the at least one command is issued by the server according to the priority of the one or more operational tasks. The server may retrieve information about available resources to accomplish the operational tasks, which may include a number of available service personnel, location of the service personnel, such as distance from the functional facility, and workload of the service personnel. The server may take these values and factors into consideration and further use the priorities to generate a deployment plan for the service personnel. For example, an emergency instruction or task may trigger immediate operation, while a regular maintenance task may be postponed. If individual tasks are postponed, their priority may increase. It is to be understood that priorities may be reflected as priority values.

According to a particularly preferred embodiment, the controller includes a wireless interface, including WiFi, Bluetooth, NFC, or LTE interface. However, it is to be understood that any kind of wireless communication interface may be used to connect the controller with the server (via a network) and/or mobile device or terminals operated by service personnel.

In yet another preferred embodiment, the controller is further configured to receive a query from a networked device to generate an operational task, wherein the controller is further configured to transmit the operational task to the server. The networked device may be operated by a user of the facility. The operational task may be a request of the user for service or maintenance. This may enable a direct feedback from users, which may be collected by the server in order to generate subsequent operational tasks. The networked device may be any kind of fixed or mobile device or a portable device.

In a further embodiment, the controller is configured to send the second information in real time. A real time transmission refers to a direct transmission of any new data to the server. This may be in contrast to a transmission of data in pre-defined intervals. Real time data ensure the availability of most up-to-date data at the server and further improve the scheduling of operational tasks that better reflect a current status of the functional facility, such as consumption values at the individual functional devices.

According to a preferred embodiment, the functional facility further comprises one or more lights. Additionally or as an alternative, the functional facility may further comprise a ventilation, preferably including one or more fans. Additionally or as an alternative, the functional facility may further comprise one or more scent dispensers. The one or more lights, the ventilation (and/or individual fans), and/or the one or more scent dispensers may represent (parts of) functional devices of the functional facility. Based on the first and/or second information, the server is configured to generate a command for operating the one or more lights, the ventilation (and/or individual fans) and/or the one or more scent dispensers, respectively. The server may increase illumination of an area of the functional facility or switch on one or more of the lights if the functional facility is used, and decrease the illumination or switch off one or more of the lights if the functional facility is not used. Accordingly, the server may increase the ventilation (and/or individual fans) and/or lighting of an area of the functional facility or turn on one or more of the lights when the functional facility is in use, and decrease or turn off the ventilation and/or lighting when the functional facility is not in use.

In a preferred embodiment, responsive to the at least one operational task, the sever is configured to determine one or more resources to be scheduled for performing the at least one operational task. The resources may include service personnel, replacement parts, consumables, and the like. The service personnel may be provided with a deployment plan including information indicating location, amount, and/or availability of the resources.

According to a particularly preferred embodiment, the facility further comprises a gateway, wherein the first information maintained by the at least one functional device and the second information from the one or more sensor devices are transmitted to the server via the gateway. The controller may be configured to directly communicate with the server and directly transmit any first or second data to the server. This includes configuring the controller with an identification of the server, such as a GUID, an IP address, or any other value, allowing the controller to direct messages to the server in a direct manner.

The gateway may be connected to the controller and the controller may be configured to submit any data, such as the first and second information and other, directly to the gateway. This may avoid complex configuration and further communication hardware in the controller. Moreover, the gateway may provide security features and control access to the controller of the functional facility. This may increase the security level and mitigate attacks directed at the controller and operation of the functional facility. For example, the gateway may implement a verification of servers, encryption of messages, and effectively block or restrict any access attempts to the controller.

According to another embodiment, the at least one functional device includes one or more of a sanitary or sanitation device, a sanitary or changing cabin or a sanitary or changing cabinet. The functional facility may be a sanitary facility, which may include the sanitary or sanitation device. Additionally or as an alternative, the sanitary or sanitation device may be encompassed by a cabin or cabinet, thus forming a sanitary cabin or cabinet, which may, preferably, include a door or any other suitable entrance means. The functional facility may comprise a changing room, which may include one or more changing cabins or cabinets that may be, preferably, equipped with a door or any other suitable entrance means. It is to be understood that the functional facility may be a combination of multiple functions, such as a changing room with a changing cabin or cabinet that may further include a sanitary cabin or cabinet, in any combination.

In yet another embodiment, the at least one functional device includes a sanitary device, such as a toilet cabin or urinal. Another functional device of the functional facility may further include a dispenser for a cleansing or lubricating product, such as a soap or disinfectant. Responsive to operation of the sanitary device, the server may be configured to monitor operation of the dispenser. This may enable inspection of hand hygiene, such as, in an environment that may require an increased level of hygiene. The functional facility may further include a washbasin or sink that are to be used after using other sanitary devices of the functional facility. The server may observe whether the user has used the soap and/or disinfectant, by monitoring the first information related to one or more of the dispenser and/or use of the washbasin or sink. If the server determines that the hygienic measures are not sufficient, the server may generate an operational task that may inform the user - via a respective mobile device of the user - that further hygienic measures are required. For example, the operational task may trigger the controller to identify local mobile devices and to send a respective information to the mobile device of the user and/or to all local mobile device if the mobile device of the user cannot be determined. Mobile devices of users may be further identified by a registration procedure, collecting device identification information during an enrollment process, and the like. For example, users of a particular group, such as employees, may be registered and may unlock a functional facility with their mobile phone, while the mobile phone may be used to communicate status information and/or warnings to individual users, if required.

According to another aspect of the present disclosure, a server for monitoring and controlling a functional facility is provided, wherein the functional facility may be according to any one of the embodiments of the present disclosure. For example, the functional facility may comprise at least one functional device, each functional device maintaining first information, the first information including at least one operational state and one or more consumption values representing operation of the functional device, one or more sensor devices configured to monitor the functional facility and the at least one functional device and to generate second information related to the functional facility, and a controller configured to transmit the first information maintained by the at least one functional device and the second information from the one or more sensor devices to the server. The server is configured to process the first information maintained by the at least one functional device and the second information from the one or more sensor devices, to generate one or more operational tasks related to the functional facility, and wherein the controller is further configured to receive at least one command from the server, the at least one command corresponding to at least one of the one or more operational tasks, and to configure operation of the functional facility according to the at least one command.

According to yet another aspect, a system, comprising one or more functional facilities and/or at least one server configured to control at least some of the one or more functional facilities. Each or at least some of the functional facilities may be according to embodiments of the present disclosure. In particular, the system may comprise at least one functional facility that comprises at least one functional device, each functional device maintaining first information, the first information including at least one operational state and one or more consumption values representing operation of the functional device, one or more sensor devices configured to monitor the functional facility and the at least one functional device and to generate second information related to the functional facility, and a controller configured to transmit the first information maintained by the at least one functional device and the second information from the one or more sensor devices to the at least one server. The at least one server is configured to process the first information maintained by the at least one functional device and the second information from the one or more sensor devices, to generate one or more operational tasks related to the functional facility, and wherein the controller is further configured to receive at least one command from the server, the at least one command corresponding to at least one of the one or more operational tasks, and to configure operation of the functional facility according to the at least one command.

In a further aspect, a method for monitoring and controlling a functional facility is defined. The method comprises maintaining, by at least one functional device of the facility, first information, the first information including at least one operational state and one or more consumption values representing operation of the respective functional device; monitoring, by one or more sensor devices of the facility, a state of the functional facility and the at least one functional device and generating second information related to the functional facility; transmitting, by a controller of the facility, the first information maintained by the at least one functional device and the second information from the one or more sensor devices to a server; processing, by the server, the first information maintained by the at least one functional device and the second information from the one or more sensor devices, and generating one or more operational tasks related to the functional facility; receiving, by the controller, at least one command from the server, the at least one command corresponding to at least one of the one or more operational tasks; and configuring, by the controller, operation of the functional facility according to the at least one command.

It is to be understood that embodiments of the functional facility, server, and/or system may include structural features configured to perform processing step corresponding to individual method steps of one or more methods according to embodiments of the present disclosure, in any combination. Structural features may include hardware components that may be equipped with a general-purpose or a special-purpose processor(s) to accomplish the defined functionality. Moreover, embodiments of the method may include processing steps reflecting a functional configuration or processing of structural features of a functional facility, server and/or system according to embodiments of the present disclosure, in any combination. For example, a method according to one embodiment of the present disclosure may define processing performed by the server, such as a generation of operational tasks, and implementation of the operational tasks in respective functional environments.

According to another aspect one or more computer-readable media storing instructions thereon are provided, wherein the instructions, when executed by one or more processing devices, configure the processing devices to perform a method according to one or more embodiments of the present disclosure.

### BRIEF DESCRIPTION OF THE DRAWINGS

The specific features, aspects, and advantages of the present disclosure will be better understood with regard to the following description and accompanying drawings where:
- Fig. 1: shows a flow chart of a method for monitoring and controlling a functional facility according to an embodiment of the present disclosure;
- Fig. 2: shows a schematic chart of a functional facility; and
- Fig. 3: illustrates a networked environment, including interconnected functional facilities.

### DETAILED DESCRIPTION

In the following description, reference is made to drawings which show by way of illustration various embodiments. Also, various embodiments will be described below by referring to several examples. It is to be understood that the embodiments may include changes in design and structure without departing from the scope of the claimed subject matter.

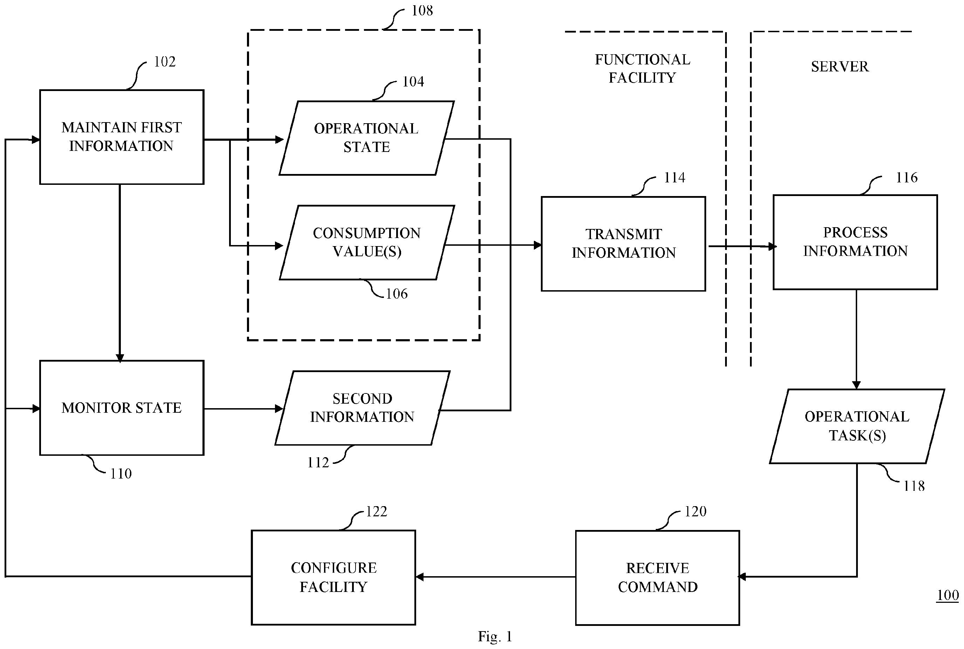

Fig. 1 shows a flow chart of a method for monitoring and controlling a functional facility according to one embodiment of the present disclosure.

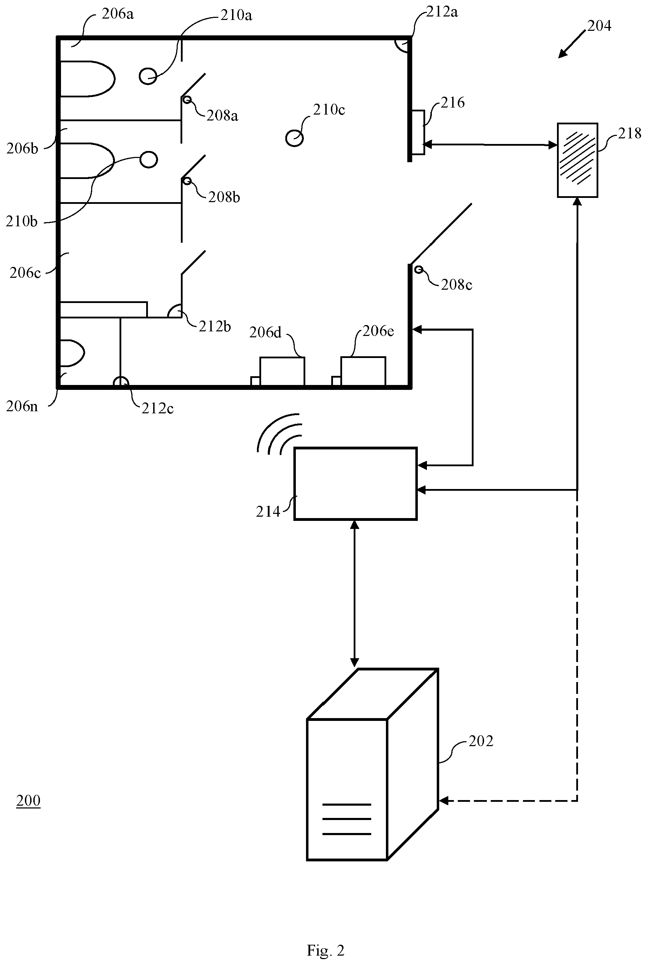

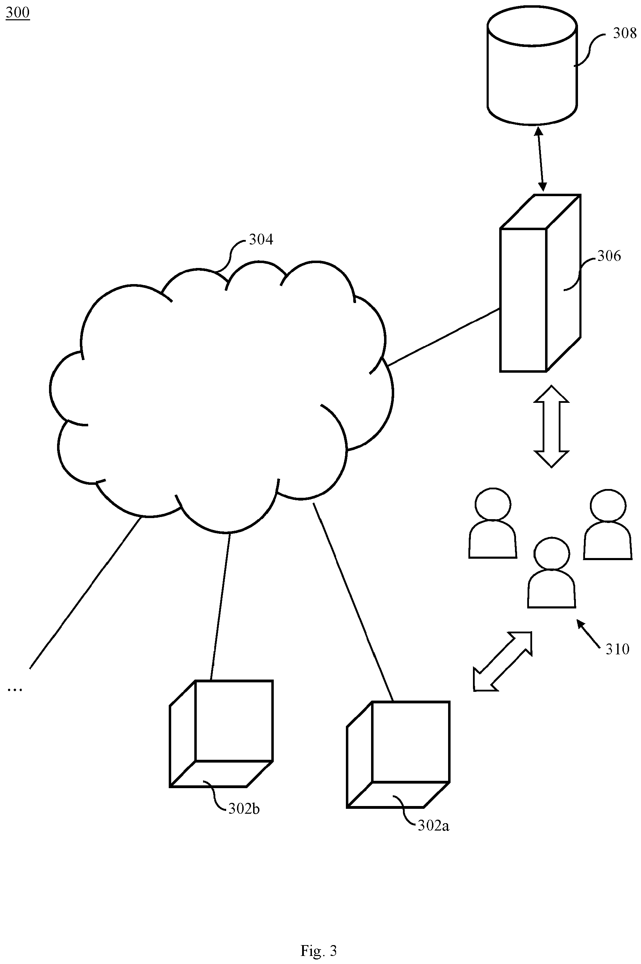

The method may be computer implemented method, executable by any processing devices, such as those shown in Figures 2 and 3.

The (computer-implemented) method 100 may start in item 102, where a functional device of a functional facility maintains own operational state 104 and/or consumption values 106. The operational state 104 and/or the consumption values 106 may represent operation of the functional device. The operational state 104 and/or the consumption values 106 may define fist information 108. The first information 108 may be determined in item 102 by a single functional device or by a plurality of functional devices, that may each determine a respective operational state and/or consumption values for the respective functional device. The functional device may also be characterized by a plurality of operational states and consumption values depending on the set-up of the functional device and components thereof. For example, a functional device may include multiple components and each component may be represented by an individual operational state and/or consumption value. Moreover, it is to be understood that a functional device may define an operational state 104 only. Thus, one or more of the consumption values 106 may be optional. In this case, the consumption values 106 may be omitted or defined as null, or the like.

The method 100 may proceed with item 110, where one or more sensor devices of the facility monitor a state of the functional facility and the functional device(s) in order to generate second information 112 related to the functional facility. Thus, while the operational state 104 and the consumption values 106 of the first information 108 may be related to one or more individual functional devices of the functional facility, the second information 112 reflects conditions of the overall functional facility or at least of parts of the functional facility that are monitored by the respective sensor devices.

In item 114, a controller of the facility may transmit the first information 108 and the second information 112 to a server. The server may be on-site or at a distributed location. The controller may either directly send the first and second information 108, 112 to the server or use a gateway (not shown) that may ensure that the first and second information 108, 112 are transmitted with a desired level of security and privacy.

In item 116, the server may process the first information 108 and the second information 112 in order to generate one or more operational tasks 118 related to the functional facility. The server may include a model of the functional facility, including processing parameters and respective dependencies. The server may use the first and second information 108, 112 to update the model of the functional facility. The model may further define rules for the individual functional devices that may trigger operational tasks 118. The operational tasks may include a maintenance task that may define a refill of consumables of a functional device or adjustment of operation of the functional device, and the like. The operational tasks may also include a cleaning task that may define a cleaning action related to the functional facility. The operational tasks may further include a repair task, which may be triggered by an operational state that may indicate that the functional device is out of order, or the like. However, even though different operational tasks have been mentioned, it is to be understood that the operational tasks may include further and other tasks that are related to operation of the functional environment.

The server may further include one or more modules or one or more engines that employ machine-learning algorithms to detect and classify patterns in the first and second information 108, 112. Based on the classification, the modules or engines may derive suitable operational tasks.

The operational tasks may be used to define at least one command for the controller of the functional facility. The at least one command may correspond to at least one of the one or more operational tasks. The commands may be derived by a rule-based system that specifies sub-tasks and respective commands to accomplish an operational task. Further to the commands for the controller of the functional facility, other commands may be directed at resources that may accomplish the operational task. These other commands may be transmitted, for example, to mobile devices of service personnel and further to storage rooms or warehouses where consumable products and/or spare parts and the like, may be stored and provided to service personnel to accomplish the operational task.

In item 120, the controller of the functional facility may receive the at least one command from the server and may proceed in item 122 to configure operation of the functional facility according to the at least one command. For example, a command may define a new operational state of a functional device. This may include various commands, such as switching lights on or off, or adjusting the light brightness, switching individual devices, such as dispenser on or off, opening or locking doors of sanitary or changing cabins, operating scent dispensers, and the like. It is to be understood that these are examples only and other commands are readily available to adjust operation of a functional device of a functional facility depending on state values, as reflected in the first and second information 108, 112.

The method 100 may proceed with items 102 and/or 110, as long as the functional facility and/or the server are functional.

It is to be understood that the method 100 may be executed sequentially or in parallel with respect to one or more steps, in any combination. For example, steps 102, 110 may execute concurrently and collect first and second information 108, 112 in a continuous manner. Item 114 may be performed in defined time intervals or in real-time. Likewise, the controller may receive commands in item 120 independent of any transmission in item 114, or linked to the transmission in item 114. This may depend on a configuration of the controller and/or of a gateway, and the respective hardware and/or software resources of the controller or gateway. Processing on the server may be triggered by the received first and second information 108, 112. However, processing on the server may continue to execute respective rule-based system, for example, based on predicted values, even without updated first and second information 108, 112. Thus, Fig. 1 shows a preferred execution order. However, embodiments of the description may (partially) deviate.

Fig. 2 shows a schematic chart of a system including a functional facility. The system 200 may be used to implement the method 100 as discussed with regard to Fig. 1. The system 200 may also include or refer to components of the networked environment 300 as discussed with regard to Fig. 3.

The system 200 may include at least one server 202 and at least one functional facility 204.

The functional facility 204 may comprise a plurality of functional devices 206, each functional device 206 maintaining first information on an operational state and consumption values, where applicable, that represent operation of the respective functional device. The functional devices 206 may, for example, include toilet cabins 206a, 206b, changing cubicle 206c, sinks with soap dispensers 206d, 206e, and/or a urinal 206n, to name a few examples.

At least some of the functional devices 206 may be cubicles or cabins with a door, such as 206a, 206b, 206c. The doors can be equipped with a lock mechanism 208a, 208b. Another lock mechanism 208c may be provided at an entrance to the functional facility 204. The functional facility 240 may be further configured with one or more lights 210a, 210b, 210c.

It is to be understood that any functional component of the functional facility may represent a functional device. Moreover, multiple functional components may be grouped as a functional device. For example, a cabin or cubicle, including a locking mechanism for the door of the cabin or cubicle, and/or a toilet or other sanitary device and/or a light withing the cabin or cubicle, can be grouped in order to form one functional device. In yet another example, a sink may form a functional device and an attached dispenser may form another functional device, or both, i.e. the sink and the dispenser may define one functional device. Thus, the functional components may be grouped according to their function and an intended use, to provide suitable definitions of functional devices that can be maintained and monitored as individual entities.

The functional facility 204 may further comprise one or more sensors 212, such as sensors 212a, 212b, 212c that are configured to monitor the functional facility 204 and at least some of the functional devices 206 in order to generate second information related to the functional facility 204. The sensors 212 may include cameras, motion sensors, and/or any other kind of optical, acoustical, olfactorical or scent sensors, to name a few.

The functional facility 204 may further include a controller 214. The controller 214 may connect to devices of the functional facility 204 using a wired or a wireless connection, such as WiFi, Bluetooth, NFC or LTE interface, to name a few. The controller 214 may retrieve the first information maintained by the at least one functional device 206 and the second information from the sensors 212 devices and transmit the first and second information to the server 202.

The functional facility 204 may further include an on-site terminal 216, which may be connected to the controller 214 and/or the server 202. The on-site terminal 216 may be controlled by the controller 214 and/or the server 202 to display information related to the functional facility 204. The on-site terminal 216 may be also controlled or operated via a mobile device 218. The mobile device 218 may connect to the controller 214 and/or the on-site terminal 216 in order to trigger operation, such as retrieving the information on the functional facility 204 (or individual functional devices 206 or other components of the functional facility 204) and/or confirming operational tasks performed on or within the functional facility 204 (or individual functional devices 206 or other components of the functional facility 204) and/or submitting further information on the functional facility 204 (or individual functional devices 206 or other components of the functional facility 204). The mobile device 218 may be operated by service personnel or users of the functional facility 204. For example, a service operator may confirm a cleaning, refill, or maintenance task related to the functional facility 204 (or individual functional devices 206 or other components of the functional facility 204). In yet another example, a user may submit information on a current state of the functional facility 204 (or individual functional devices 206 or other components of the functional facility 204).

The on-site terminal 216 may be triggered by approaching the on-site terminal 216 with the mobile device 218. The on-site terminal 216 and the mobile device 218 may exchange identification information. If the mobile device 218 is recognized as being operated by service personnel (for example, by checking a data base and verifying whether the identification information of the mobile device 218 are pre-registered in the data base), the on-site terminal 216 may communicate data to the mobile device 218, including the first and second information, and other state information or further information provided by the controller 214, such as individual tasks that are to be performed on the functional facility 204 (or individual functional devices 206 or other components of the functional facility 204). If the mobile device 218 is not recognized as being operated by service personnel, the on-site terminal 216 may identify a target to which the mobile device 218 can send a message including text related to the functional facility 204 (or individual functional devices 206 or other components of the functional facility 204). This may be accomplished, for example, by displaying a QR code or any other identification means that can be received (or scanned) by the mobile device 218 in order to connect to the on-site terminal 216. For example, the QR code may include an ID, such as an IP address or web address, of the server 202 or the controller 214.

The server 202 is configured to receive the first information maintained by the functional devices 206 and the second information from the sensors 212 via the controller 214. The server 202 may generate operational tasks that are required to maintain operation of the functional facility 204. This may include operational tasks, such as maintenance tasks, cleaning tasks, refill tasks, and/or repair tasks. The server 202 may further generate commands for the controller 214 that correspond to at least one of the one or more operational tasks. The server 202 may further provide information to mobile devices operated by service personnel. The server 202 may further register identification information of individual mobile devices of the service personnel in respective databases, in order to enable identification of the mobile devices at the on-site terminal 216.

The controller 214 may receive the commands from the server 202 and configure operation of the functional facility 204 according to the commands. This may include changing a state of functional devices 206, locking or unlocking doors by triggering locks 208a, 208b, 208c, displaying information, for example, on the on-site terminal 216, such as a state of the functional facility, information, warnings, and the like.

The functional facility 204 can be fully operated, maintained and controlled via the server 202. Thus, operation and monitoring of the functional facility 204 is not limited to individual devices or components, but encompasses the entire functional facility 204, including aspects, such as ventilation, light, room fragrance, cleaning articles, building hygiene, dispenser filling with hygiene articles and, if necessary, even delivery based on dispenser data as reflected in the first information.

The sensors 212 may include LIDAR sensors, which may be small and inexpensive, laser-guided systems that can automatically detect, count, and/or track objects anonymously.

Further, sensors 212 may be placed in dispensers, which may send in real time various data, such as fill level, identifier, battery level, via the controller 214 to the server 202 (or a respective cloud). The information may be sent in real time, however, in different intervals, that may depend on a threshold X. For example, if a fill level is above X (e.g. 20%, 30%, 40%, 50% and the like), the information may be sent occasionally, i.e. in intervals of particular length or, in case of mobile functional devices, if the controller 214 has access to the server 202. If the fill level is below X, the information may be sent on every change.

The sensors 212 may further include motion detectors / infrared sensors that may provide motion data.

Other sensors 212 may include RFID base stations that may read RFID data (e.g. from an RFID wristband) on contact and send it to the controller. For example, a user operating a functional device 206 may approach an RFID reading using a wristband or mobile device to indicate that the functional device 206 has been used. The functional facility 204 may further employ QR codes, wherein mobile devices may send a message to the controller 2014 or server 202 after scanning, or NFC, wherein mobile devices may automatically send a message to the controller 214 or the server 202 via radio when approaching (< 10 cm) an NFC reader, which may be placed, for example, in at least some functional devices 206, such in every toilet, sink or the like. However, it is to be understood that NFC, RFID or QR code can be used in any combination and as alternatives.

According to embodiment of the present disclosure, each individual (primary) customer may receive structured, specially prepared data based on the data collected by sensors and otherwise data according to their needs. (If applicable, for individual buildings, locations, and/or e.g. country-specific, and/or cumulated for the group, etc.). The server 202 may calculate or predict (also for service operators, distributors and suppliers) a future consumption, i.e. consumables, spare parts, articles and the like, to be ordered, as well as quantity and expected time.

In embodiments of the present disclosure, service operators, distributors and suppliers may be granted access to data and information provided by the server 202 as far as this is authorized by the respective operator of the functional facility 204.

In embodiments of the present disclosure, producers of consumables may get access to cumulative, structured, anonymized data of their consumables. Moreover, they may receive, via an API of the server 202, access to third party data, such as weather, traffic, vacation season, supply chain, and the like, to enable them to do their own forecasts.

In embodiments of the present disclosure, service personnel and/or service providers that accomplish, for example re-filling and/or cleaning services, may be given access to structured data via the server 202 that may reflect the operational tasks. The service providers may provide data for these tasks, including when and how many service personnel are available.

Regarding users of the functional facility 204, the controller may collect, combine and transmit data from LIDAR and motion detectors that may reflect user behavior, further sensors in dispensers, WC entrance doors, as well as self-closing, digitally controlled, automatically locking cubicle doors and cameras or other sensors in toilets, cubicles, or throughout the area covered by the functional facility.

Personal user data and behavior data may be transmitted via NFC, RFID, face recognition, and other means to the controller 214 and/or the serve 202. For example, employees that must comply with a hygiene level, such as employees of clinics or other medical facilities, may be required to wear RFID wristbands, which may be used to transmit hygiene management data on whether the employees have used (disinfectant) dispensers next to a door before entering a patient room.

The server 202 may calculate the number of users, and/or cleaning requirements, based on the first and second data, for example, based on the use of the dispensers, person counts, or LIDAR data. The controller 214 may transmit the actual room condition/cleaning needs in real time to the server 202.

Gateways may be used if required to ensure particular security requirements. However, it may be advantageous to establish direct communication links to the server 202, for example, by using mobile technology, such as 5G or LTE.

Based on the data, for example, toilet cubicles that have not been used according to sensor data do not have to be cleaned. The corresponding data may be stored on the server or in the cloud and can be accessed at any time via mobile devices or terminals operated by service personnel.

If the service personnel logs on to the a functional facility via NFC, a mobile terminal may automatically receive information as to which functional devices, booths, cubicles or cabins are locked according to sensor data because they have not been used, and which of them are locked because they are currently being used. Sensor data can be used at any time (e.g., at the end of operation) to determine whether users are present in the functional facility. This may include identifying users that may be present without authorization. Cubicle or cabin doors may be unlocked or locked via an app on the mobile device or terminal operated by service personnel.

If a user leaves a cabin or cubicle, or does not leave it within a pre-defined period of time X, a sensor within the cabin or cubicle, such as a camera, may automatically obtain a photograph of the cabin or cubicle, and the server may compares the photograph with data stored in the server or cloud that may represent a target state. If a (significant) deviation is detected, the taken photo may be automatically forwarded to a pre-defined address (of service personnel). This may allow for taking a decision (automatically at the server or semi-automatically by the server in connection with a service operator) as to whether, or how urgently an action is required. Reasons may include forgotten items (such as a bag), tissues on the floor, not flushed enough, vandalism, lifeless person, and the like. It is to be understood that same option may be applied to any functional devices 206 of the functional facility 204 in the area covered by the functional facility 204. If, for privacy reasons, no camera can be used, the system may be configured to transmit an information to a pre-defined address, if a user does not leave a cabin, cubicle or booth according to sensor data within a predefined time period X, or identification of a person is made impossible through the use of appropriate software.

The server 202 may apply a rule-based system in order to generate a service task, if according to sensor data, in contrast to all other functional devices, a functional device is not used for a period of time that is longer than an average time of the other functional device. Reason may be defect, dirty, or person requiring assistance. A user may also request service via a mobile device using an NFC installed in the room or an on-site terminal. Additionally or as an alternative, cleaning may be required according to usage data (e.g. frequency > X) and/or minimum requirements.

If cleaning of a functional device is necessary according to sensor data, the server calculates on the basis of the expected frequency whether the cleaning is necessary in the short term or can be done at a later time. If a booth fails according to sensor data, it may not have to be cleaned immediately, but may be closed automatically.

The server may be further configured to provide information (for example for monitoring or billing purposes), including who controlled the service task, when was it controlled, whether environment, room or functional facility, or individual functional device have been cleaned. This may be achieved by monitoring whether service personnel has logged in via NFC and, if necessary, logged out as well. Alternatively, service personnel may be tracked (permanently) using mobile devices or terminals.

According to embodiments, for a (re-)filling procedure the server may also take into consideration a priority, expected frequency, available personnel and, if necessary, available booths, whether a filling of the dispenser is necessary at short notice or can be done at a later time, and transmits the result. For example, individual towel dispensers in a row and fragrance dispensers may not be prioritized. If consumables or other goods according to a sensor, such as toilet paper run out in a toilet cubicle, they are not necessarily replaced immediately, but the cubicle may be closed automatically if necessary and another one may be opened instead.

According to one or more embodiments, the control of light, ventilation and fragrance dispensers may be based on data that the room is entered, which may activate light and ventilation, and switched them off at the earliest, as soon as no person is in the room according to the data. In case of ventilation, the time duration may be defined longer for a fixed time period X, if necessary.

The server may calculate the time control of the fragrance dispenser and ventilation based on the type of use. If a cubicle is only used for a short time or a urinal is used, a smaller quantity of fragrance may be used and the ventilation may be used for a shorter time (plus odor and/or heat sensors if necessary). If the period of use of a WC cubicle exceeds a defined period X, the ventilation may run longer and the fragrance dispenser may spray a larger amount of fragrance (or if necessary according to odor and/or heat sensors). Moreover, the room temperature can be adjusted automatically at any time according to the calculated frequency.

With regard to hand hygiene, sensors may transmit data as soon as users move away from the urinal or leave the booth. The sensors may transmit data when users move to the (WC) exit door instead of the wash hand basin. This may trigger a reminder for hand hygiene (visual and/or auditory) before leaving the toilet.

If a user approaches the wash basin according to motion sensor and uses a soap dispenser water according to a sensor, a time measurement and also a visual and/or audible action may be triggered, and thus the minimum duration of the washing process may be shown to the user and/or the course of the washing process is shown via, for example, a display component that may be integrated in a mirror, such as an LED light strip that gradually lights up, or switches off, over a defined period of time, or via component in the mirror that may show a video washing tutorial, and the like. If, according to sensor data, the user removes himself from the sink too early or, according to sensor data, uses the towel too early, this is communicated to the server, which may transmit respective data to a hygiene management entity of the functional facility. The same applies if, according to sensor data, a disinfection dispenser is not used or a towel is not used.

A correct hand hygiene can (also) be checked automatically via a camera. The camera my switch on when approached according to sensor data. The server 202 may compare a sequence in real time with a correct sequence stored on the server and may send a result (correct hand hygiene yes/no) to an address, for example, of the hygiene management entity.

Hygiene management can also use this (visually) processed data to track in real time whether users are using the toilet correctly, or without washing, without sufficient washing, with or left without hand drying, with or without disinfection, with or without disinfection of the cell phone.

The server 202 may also control storage of consumables. A sensor may send data when each dispenser is filled with consumables, including a type of consumable and quantity. With the filling, the respective stock in a warehouse may be automatically reduced by the quantity with which the dispenser was filled (pieces, liters, grams, %). This may largely avoid any logging of remaining consumables on return to the storage or warehouse. Consumption of consumables not tracked by sensors may be recorded in the warehouse by LIDAR, weight sensors, cameras, NFC, barcode and QR code and point-of-sale systems, or, if this is not possible, calculated based on user numbers, consumption of recorded goods and third-party data, if applicable. The actual amount of consumables that have been delivered may be used to automatically update the stock using data from the cloud. If a product in the warehouse falls below the minimum stock, a purchase may be automatically triggered.

The server may further take into account external data, such as weather, (international) traffic conditions, strike, major events, third party consumption, (civil) war, (regional and international) disasters, for example, a blockade of a traffic route, such as the Panama Canal, may cause delivery problems, which may influence the time of ordering and/or the delivery.

The server may further support germ control applications. In hand wash basins or sinks, sensors can be installed in the air shaft and siphon that measure, among other things, the germ and/or virus load, and send it to the server or the cloud. The load can be calculated in real time. If the load exceeds limits, this info may be used to generate an operational task.

Fig. 3 illustrates a networked environment, including interconnected functional facilities. The networked environment 300 may be used to implement the method 100 as discussed with regard to Fig. 1. The networked environment may also include or refer to components of the system 200 as discussed with regard to Fig. 2.

The networked environment 300 includes one or more functional facilities 302a, 302b, ... that may be interconnected via a network 304 or cloud with one or more servers 306. The servers 306 may further access data storage or cloud storage 308. The servers 206 may generate, responsive to information received from the functional facilities 302 operational tasks, which may be transmitted to service personnel 310 and the individual functional facilities 302. The service personnel 310 may perform respective service tasks on the functional facilities 302.

The servers 306 may provide online services, which may be accessible via the network 304 by a plurality of users operating client devices or other remote terminals. For example, each user may be connected via a client device with at least one server 306 hosting the online service. The respective server 306 may provide the user with one or more interfaces that may be provided or displayed on the client device or terminal and allow the user to interact with the online service 306. For example, a server 306 may generate a personalized page which may be rendered on the client device of the user. The user may apply any interaction technique available on his or her client device, such as mouse interaction, keyboard interaction, gesture recognition, or touch interfaces, and the interaction input may be transferred to the server 306 where it may be further processed in order to initiate a certain action. Also, the input may be processed on the client device, in order to provide the server with commands or instructions on how to further proceed. The user interface may guide the user to perform the required operational task for the functional facility 302.

The techniques described herein may be implemented in of various computing systems. Such systems generally involve the use of suitably-configured computing devices implementing a number of modules, each providing one or more operations needed to complete execution of such techniques. Each module may be implemented in its own way; all need not be implemented the same way. As used herein, a module is a structural component of a system which performs an operational role, however instantiated, which may be a portion of or an entire software element (e.g., a function of a process, a discrete process, or any other suitable embodiment). A module may comprise computer-executable instructions, and may be encoded on a computer storage medium. Modules may be executed in parallel or serially, as appropriate, and may pass information between one another using a shared memory on the computer on which they are executing, using a message passing protocol or in any other suitable way. Exemplary modules are described below carrying out one or more tasks, though it should be appreciated that the modules and division of tasks described is merely illustrative of the type of modules that may implement the exemplary techniques described herein, and that the invention is not limited to being implement in any specific number, division, or type of modules. In some implementations, all functionality may be implemented in a single module. Further, the modules are discussed below, for clarity, as all executing on a single computing device, though it should be appreciated that, in some implementations, the modules may be implemented on separate computing devices adapted to communicate with one another. For example, one computing device may be adapted to execute an identification module to identify available networks, and connection modules on other computing devices may retrieve information on available networks from the computing device prior to establishing a connection.

Fig. 3 illustrates a block diagram of a networked environment operable to execute the disclosed embodiments. Generally, program modules include routines, programs, components, data structures, etc., that perform particular tasks or implement particular abstract data types. Moreover, those skilled in the art will appreciate that the inventive methods can be practiced with other computer system configurations, including single-processor or multiprocessor computer systems, minicomputers, mainframe computers, as well as personal computers, hand-held computing devices, microprocessor-based or programmable consumer electronics, and the like, each of which can be operatively coupled to one or more associated devices.

The illustrated aspects of the claimed subject matter may be practiced in distributed computing environments, such as the environment 300, where certain tasks are performed by remote processing devices, such as servers 306 and storage 308, that are linked through a communications network 304. In a distributed computing environment, program modules can be located in both local and remote memory storage devices.

A computer typically includes a variety of computer-readable media. Computer-readable media can be any available media that can be accessed by the computer and includes both volatile and non-volatile media, removable and non-removable media. By way of example, and not limitation, computer-readable media can comprise computer storage media and communication media. Computer storage media includes both volatile and non-volatile, removable and non-removable media implemented in any method or technology for storage of information such as computer-readable instructions, data structures, program modules or other data. Computer storage media includes, but is not limited to, RAM, ROM, EEPROM, flash memory or other memory technology, CD-ROM, digital video disk (DVD) or other optical disk storage, magnetic cassettes, magnetic tape, magnetic disk storage or other magnetic storage devices, or any other medium which can be used to store the desired information and which can be accessed by the computer.

While some embodiments have been described in detail it is to be understood that the aspect of the disclosure can take many forms. In particular, the claimed subject matter may be practiced or implemented differently from the examples described and the described features and characteristics may be practiced or implemented in any combination. The embodiments shown herein are intended to illustrate rather than to limit the invention as defined by the claims.

## Claims

1. A functional facility, comprising
at least one functional device, each functional device maintaining first information, the first information including at least one operational state and one or more consumption values representing operation of the functional device;
one or more sensor devices configured to monitor the functional facility and the at least one functional device and to generate second information related to the functional facility; and a controller configured to transmit the first information maintained by the at least one functional device and the second information from the one or more sensor devices to a server, wherein the server is configured to process the first information maintained by the at least one functional device and the second information from the one or more sensor devices, to generate one or more operational tasks related to the functional facility, and wherein the controller is further configured to receive at least one command from the server, the at least one command corresponding to at least one of the one or more operational tasks, and to configure operation of the functional facility according to the at least one command.

2. The facility of claim 1, wherein the one or more sensors include a sensor for detecting users of the facility, and wherein the second information includes information on the number of users using the at least one functional device.

3. The facility according claims 1 or 2, wherein the at least one functional device includes a room or a cabin, wherein the at least one command is to operate an entrance of the room or cabin, wherein the entrance is locked responsive to the at least one command if at least one of the one or more consumption values falls below or exceeds a threshold value or if the at least one operational state indicates that the room or cabin has not been used, and wherein if the room or cabin has been used for a time duration that exceeds a threshold, the controller is further configured to verify whether the operational state of the room or cabin has changed.

4. The facility according to any one of the preceding claims, wherein the one or more sensors include a camera or a LIDAR, and the second information includes one or more images of the at least one functional device, wherein after operation of the at least one functional device, the one or more images are compared with a reference image of the at least one functional device.

5. The facility according to any one of the preceding claims, wherein the controller is further configured to receive a query for information related to the at least one functional device, and, responsive to the query, send the first and second information to a device, wherein the first and/or second information are submitted to the device responsive to the device initiating communication with the functional facility using a local terminal.

6. The facility according to any one of the preceding claims, wherein the one or more operational tasks include one or more of a cleaning task, a refill task, and/or a repair task.

7. The facility according to any one of the preceding claims, wherein responsive to the consumption values exceeding a threshold, the server is configured to generate a refill task and/or issue a command to restrict access to the at least one functional device, wherein the server is configured to compare the consumption values with a frequency of use of the at least one functional device to determine an expected time for the refill task and to delay generation of the refill task by the expected time.

8. The facility according to any one of the preceding claims, wherein the one or more operational tasks each include a priority and the at least one command is issued by the server according to the priority of the one or more operational tasks.

9. The facility according to any one of the preceding claims, wherein the controller is further configured to receive a query from a networked device to generate an operational task, wherein the controller is further configured to transmit the operational task to the server.

10. The facility according to any one of the preceding claims, further comprising at least one of one or more lights, one or more scent dispensers, and/or one or more fans, wherein based on the first and/or second information, the server is configured to generate a command for operating the one or more lights, the one or more scent dispensers and/or the one or more fans.

11. The facility according to any one of the preceding claims, wherein responsive to the at least one operational task, the sever is configured to determine one or more resources to be scheduled for performing the at least one operational task.

12. The facility according to any one of the preceding claims, further comprising a gateway, wherein the first information maintained by the at least one functional device and the second information from the one or more sensor devices are transmitted to the server via the gateway.

13. The facility according to any one of the preceding claims, wherein the at least one functional device includes one or more of a sanitary or sanitation device, a sanitary or changing cabin or a sanitary or changing cabinet.

14. The facility according to any one of the preceding claims, wherein the at least one functional device includes a sanitary device, such as a toilet cabin or urinal, and further includes a dispenser for a cleansing or lubricating product, such as a soap or disinfectant, and responsive to operation of the sanitary device, the server is configured to monitor operation of the dispenser.

15. A system, comprising the functional facility according to any one of the preceding claims.
